# EUROPEAN PATENT APPLICATION

(11) **EP 2 372 630 A1**
(43) Date of publication of application: **05.10.2011**
(21) Application number: 10425107.9
(22) Date of filing: 01.04.2010
(51) Int. Cl.: G06Q 20/00

(54) **Automatic conversion of the sepa direct debit (s.d.d.) in a transaction compatible with the credit card transaction**

(71) Applicant: Aneva S.r.l., 35010 Vigodarzere (PD) (IT)
(72) Inventor: Callegari, Valentino, 35010 Vigodarzere (PD) (IT)
(74) Representative: Vinci, Marcello

(57) **Abstract**

The conversion from SEPA Direct Debit (S.D.D.) in Credit Card transaction is an automatic process that converts the standard protocols of the S.D.D. in a transaction (transaction log) compatible with the Credit Card transaction and returns the answer in PSD (Payment Services Directive) standard. We call this process , for expressive convenience, "Revers S.D.D.".

## Description

### PRELIMINARY REMARKS

We indicate some essential elements for the comprehension of the description.

### SEPA - Single Euro Payments Area

European Payment Council (EPC) - The European Payments Council is responsbile for the realization of the SEPA project.

### Payment Services Directtive (PSD)

### DESCRIPTION

The field of the technique to which makes reference is the banking sector, specifically identified in the executive process that moves a sum of money from an account to an other account.

Currently, as we know, id does not exist an instrument that converts the S.D.D in transactions (transaction logs) compatible with the Credit Card transaction.

In order to understand the mechanism of the invention must be known the following concepts:

The SEPA Direct Debit is a payment instrument for the entire Eurozone, that will,in the medium-term, replace today's many different national direct debit schemes.

The EU Payment Services Directive is in principle a pre-condition for harmonizing today's differing legal jurisdictions regarding direct debit refunds and for enabling the use of direct debits across national borders according to the new scheme rules.

SEPA direct debit transactions are based on a direct debit mandate, which the debtor (payer) gives to the creditor (payee). The latter submits the direct debit to his bank for collection. The direct debit data at the same time contains the electronic mandate data. Hence, the debtor's bank receives the mandate information integrated in the clearing process. The debtor's bank is not obligated to dispatch the mandate data received to its customer (the debtor), nor is it required to check or administer this data. However, it may offer such functions to its clients as value-added services.

Key Features of SEPA Direct Debit include:
- Allows for domestic and cross-border direct debits
- IBAN and BIC replace national account numbers and sort codes
- The SEPA direct debit is a collections process based on a mandate signed by the debtor and presented to the creditor
- This mandate is standardized in content and must be issued in the language of the debtor's country of residence

The SEPA Direct Debit will replace domestic legacy schemes in the medium term. The importance of old infrastructures and formats will start to wane and eventually they will be no longer required.

The transaction on credit card is an electronic system of payment that makes use of a virtual terminal installed in the technical structures of the banks, through which it is possible to execute Credit Card payment of products or services. The file that identifies the Credit Card transactions is commonly called "transaction" ("transaction log").

### The process

The conversion from SEPA Direct Debit (S.D.D.) in Credit Card transaction is an automatic process that converts the standard protocols of the S.D.D. in a transaction (transaction log) compatible with the Credit Card transaction and returns the answer in PSD (Payment Services Directive) standard. We call this process , for expressive convenience, "Revers S.D.D.".
1. The documentation S.D.D is converted, according to the standards of the PSD (Payment Services Directive) / SEPA", in a parametrized electronic flow.
2. The "Revers S.D.D." system decomposes the S.D.D. flow and it extrapolates the essential data in order to identify:
   a. the sum of money, namely, the value expressed in current currency;
   b. the expiration, namely the moment of the executionof of the transfer of the sum of money;
   c. the creditor, namely the adressee of the sum;
   d. the debtor, namely the sender of the sum.
3. The "Revers S.D.D." system builts a transaction on the strength of a transaction log starting from the data extrapolated at 2^{nd} point).
4. The "Revers S.D.D." system sends for execution in a virtual terminal the transaction developed at the 3^{rd} point and waits for an answer.
5. The "Revers S.D.D." system decomposes the answer and it extrapolates the following values:
   a. the sum of money, namely the value expressed in current currency;
   b. the expiration, namely the specific moment of the execution of the transaction
   c. the creditor, namely the adressee of the sum;
   d. the debtor,namely the sender of the sum;
   e. the outcome, namely the positive or negative answer at the request of money.
6. The "Revers S.D.D." system recomposes the outcome of the S.D.D. starting from the data extrapolated at the 5^{th} point generating the electronic flow of return or answer S.D.D.

## Claims

1. Conversion process from the SEPA Direct Debit standard to the standard compatible with the electronic charge on Credit Card.

2. Conversion process of the result of the charge on Credit Card in a result compatible with the SEPA Direct Debit standard.
